# EUROPÄISCHE PATENTSCHRIFT

(11) **EP 2 206 406 B1**
(45) Veröffentlichungstag und Bekanntmachung des Hinweises auf die Patenterteilung: **10.12.2014**
(21) Anmeldenummer: 08802588.7
(22) Anmeldetag: 25.09.2008
(51) Int. Cl.: H05B 3/08, H05B 3/42, B29C 45/17, H05B 3/46, B29C 45/27, H01R 43/20

(54) **ANSCHLUSSEINRICHTUNG**
CONNECTION DEVICE
DISPOSITIF DE RACCORDEMENT

(30) Priorität: 25.10.2007 DE 202007014964 U
(43) Veröffentlichungstag der Anmeldung: 14.07.2010
(73) Patentinhaber: Günther Heisskanaltechnik GmbH, 35066 Frankenberg (DE)
(72) Erfinder: GÜNTHER, Herbert, 35108 Allendorf-Rennertehausen (DE); ZIMMERMANN, Frédéric, 90482 Nürnberg (DE); SOMMER, Siegrid, 35099 Burgwald-Ernsthausen (DE)
(74) Vertreter: Patentanwälte Olbricht Buchhold Keulertz
(86) Internationale Anmeldenummer: PCT/EP2008/008115
(87) Internationale Veröffentlichungsnummer: WO 2009/052918

(56) Entgegenhaltungen:
- WO-A-03/078123
- WO-A-2004/043672
- WO-A-2005/053361
- US-A- 4 156 127
- US-A1- 2005 109 767
- US-A1- 2007 086 759

## Beschreibung

Die Erfindung betrifft eine Anschlusseinrichtung zum Erzeugen einer elektrischen Verbindung zwischen einer auf einem Substrat angeordneten Heizeinrichtung, insbesondere eine Heizeinrichtung für eine Spritzgießdüse, und einer mit einer Stromquelle verbundenen Anschlussleitung gemäß dem Oberbegriff von Anspruch 1. Ferner bezieht sich die vorliegende Erfindung auf eine Heißkanaldüse mit einer solchen Anschlusseinrichtung sowie auf besagte elektrische Verbindung.

Spritzgießdüsen sind im Stand der Technik allgemein bekannt. Sie werden dazu eingesetzt, um eine fließfähige Masse - beispielsweise eine Kunststoffschmelze - bei einer vorgebbaren Temperatur unter hohem Druck einem trennbaren Formeinsatz zuzuführen. Sie haben meist ein Materialrohr mit einem Strömungskanal, der in einem Düsenmundstück endet. Letzteres bildet endseitig eine Düsenaustrittsöffnung, die über eine Angussöffnung in den Formeinsatz (Formnest) mündet. Damit sich die fließfähige Masse innerhalb des Materialrohrs nicht vorzeitig abkühlt, sind eine oder mehrere elektrische Heizeinrichtungen vorgesehen, die bis in das Düsenmundstück hinein für eine möglichst gleichmäßige Temperaturverteilung sorgen.

WO 2004/043672 offenbart einen Auschlußeinrichtung nach dem Oberbegriff des Anspruchs 1.

Um eine Heizeinrichtung mit geringen Abmessungen und grundsätzlich beliebiger Form zu erzielen, schlägt DE-A-199 41 038 vor, auf zumindest einer Wandung eines einen Strömungskanal aufweisenden Materialrohrs wenigstens eine Isolierschicht und wenigstens eine Heizleiterbahnen aufweisende Heizschicht mittels Direktbeschichtung stoffschlüssig aufzubringen. Die Heizeinrichtung und das Materialrohr werden mithin einteilig ausgebildet, wobei bei einem elektrisch isolierenden Materialrohr auf die Isolationsschicht auch verzichtet werden kann. Die Direktbeschichtung wird beispielsweise unter Verwendung der Folien-, Dickschicht- oder Siebdrucktechnik realisiert, wobei die Schichten nach dem Auftragen separat oder simultan eingebrannt werden. Das stoffschlüssige Aufbringen der Heizeinrichtung in Schichten sorgt für eine dauerhaft feste Verbindung mit der Wandung des Materialrohrs und damit für einen festen Halt auf dem Heißkanalverteiler oder der Heißkanaldüse. Aufgrund der durch die Direktbeschichtung erzielten geringen Dickenabmessungen nimmt die Heizeinrichtung insgesamt nur wenig Bauraum ein, sodass sich äußerst kompakte Bauformen realisieren lassen. Zudem kann auf Grund der einteiligen Ausbildung die Leistungsdichte deutlich erhöht werden, da die Wärme direkt auf der Oberfläche des zu beheizenden Heißkanalelementes erzeugt und abgenommen wird. Eine Überhitzung der meist empfindlichen Heizelemente wird dadurch sicher vermieden. Ferner lässt sich die Düse rasch und präzise aufheizen und ebenso wieder abkühlen, was sich günstig auf den gesamten Produktionsablauf auswirkt.

Um eine solche Heizeinrichtung mit Energie zu versorgen, ist es erforderlich, eine elektrische Verbindung zwischen den Heizleiterbahnen und einer Stromquelle herzustellen. Eine solche elektrische Verbindung muss grundsätzlich folgende Anforderungen erfüllen: Zum einem muss sie einen elektrischen Kontakt zwischen der Heizeinrichtung und einer mit einer Stromquelle verbundenen Anschlussleitung herstellen. Zum anderen muss sie aufgrund der beim Spritzgießen vorherrschenden hohen Temperaturen temperaturresistent sein. Ferner muss sie mechanischen Zuganforderungen genügen und für eine elektrische Isolation nach innen und außen sorgen. Schließlich sollte sie möglichst klein dimensioniert sein, um eine Miniaturisierung der Spritzgießdüse zu realisieren. Gerade bei Dickschichtheizeinrichtungen gemäß DE-A-199 41 038 spielt der zuletzt genannte Punkt eine wichtige Rolle.

Es ist eine Aufgabe der vorliegenden Erfindung, eine Anschlusseinrichtung zum Erzeugen einer elektrischen Verbindung zwischen einer auf einem Substrat angeordneten Heizeinrichtung, insbesondere eine Dickschichtheizeinrichtung für eine Spritzgießdüse, und einer mit einer Stromquelle verbundenen Anschlussquelle zu schaffen, die den zuvor genannten Anforderungen zumindest teilweise Rechnung trägt. Ferner soll eine Spritzgießdüse mit einer solchen Anschlusseinrichtung sowie eine elektrische Verbindung der genannten Art bereitgestellt werden.

Zur Lösung dieser Aufgabe schafft die vorliegende Erfindung eine Anschlusseinrichtung zum Erzeugen einer elektrischen Verbindung zwischen einer auf einem Substrat angeordneten Heizeinrichtung, insbesondere einer Heizeinrichtung für eine Spritzgießdüse, und einer mit einer Stromquelle verbundenen Anschlussleitung, wobei die Anschlusseinrichtung einen Anschlusskörper aufweist. Dieser Anschlusskörper ist erfindungsgemäß aus einem elektrisch nicht leitenden Material hergestellt, bevorzugt aus einer nicht leitenden Keramik, wie beispielsweise Aluminiumoxid, Steatit, Zirkonoxid oder dergleichen. Ferner umfasst der Anschlusskörper zumindest ein Durchgangsloch zur Aufnahme der Anschlussleitungen, dass im bestimmungsgemäßen Zustand in einer der Heizeinrichtungen zugewandten Fläche des Anschlusskörpers endet, wobei der Anschlusskörper bevorzugt für jede Anschlussleitung ein separates Durchgangsloch aufweist. Zudem ist der Anschlusskörper erfindungsgemäß an/oder auf dem Substrat derart fixierbar, dass die im bestimmungsgemäßen Zustand durch das zumindest eine Durchgangsloch hindurch geführten Anschlussleitungen mit ihren freien Enden mit der Heizeinrichtung in Kontakt stehen, um auf diese Weise die zu erzielende elektrische Verbindung herzustellen.

Bevorzugt ist der Anschlusskörper derart ausgebildet, dass die freien Enden der Anschlussleitungen im bestimmungsgemäßen Zustand zwischen derjenigen Seitenfläche des Anschlusskörpers, die der Heizeinrichtung zugewandt ist, und der Heizeinrichtung angeordnet sind. Dazu weist der Anschlusskörper an derjenigen Seitenfläche, die der Heizfläche im bestimmungsgemäßen Zustand zugewandt ist, vorteilhaft zumindest eine Aussparung auf, die derart ausgelegt ist, dass in Ihr zumindest ein Abschnitt eines freien Endes einer Anschlussleitung, beispielsweise ein umgebogener oder anders verformter freier Endabschnitt der Anschlussleitung, aufnehmbar ist. Durch die Ausbildung dieser zumindest einen Aussparung wird ein bündiges oder formschlüssiges Abschließen zwischen dem Anschlusskörper und dem Substrat sichergestellt. Indem die Anschlussleitungen an ihrem freien Ende verformt oder formangepasst werden, kann zudem die Kontaktfläche zwischen den Anschlussleitungen und der Heizeinrichtung vergrößert werden, wodurch ein besserer elektrischer Kontakt sowie eine festere Verbindung zwischen den Anschlussleitungen und der Heizeinrichtung realisierbar sind. Auch kann durch Umbiegen oder Verformen der freien Endabschnitte der Anschlussleitungen verhindert werden, dass eine direkte Zugbelastung auf die elektrische Verbindung wirkt. Ferner ist es vorteilhaft, wenn für jeden Abschnitt eines freien Endes an der Anschlussleitung eine separate Aussparung vorgesehen ist. Entsprechend werden die freien Enden der Anschlussleitungen ohne weiteres Zutun voneinander elektrisch isoliert.

Gemäß einer weiteren Ausgestaltung der vorliegenden Erfindung ist die zumindest eine Aussparung bevorzugt derart ausgebildet, dass das zumindest eine freie Ende in der Anschlussleitung im bestimmungsgemäßen Zustand form- und/oder reibschlüssig in dieser angehalten ist, um eine vorbestimme Ausrichtung und Anordnung der freien Enden der Anschlussleitungen in der Aussparung zu erzielen.

Bevorzugt ist die zumindest eine Aussparung zur Aufnahme eines freien Endes einer Anschlussleitung nutartig ausgebildet.

Ferner kann die zumindest eine Aussparung einen Abschnitt aufweisen, der derart ausgebildet ist, dass er an die Oberfläche desjenigen Substrats, an dem der Anschlusskörper im bestimmungsgemäßen Zustand fixiert werden soll, angepasst ist. Handelt es sich bei dem Substrat beispielsweise um ein Materialrohr mit kreisförmigem Querschnitt, so kann dieser Abschnitt beispielsweise eine dreieckige oder trapezförmige oder rundliche Form aufweisen, sodass sich zwischen dem Anschlusskörper und dem Substrat zumindest mehrere Berührungslinien ergeben, wodurch eine bessere relative Positionierung zwischen dem Anschlusskörper und dem Substrat erzielt werden kann.

Zum Befestigen des Anschlusskörpers an dem Substrat kann die Anschlusseinrichtung eine entsprechende Halteanordnung aufweisen. Zum lösbaren Befestigen des Anschlusskörpers an dem Substrat kann diese Halteanordnung als Klemmeinrichtung oder Rasteinrichtung ausgebildet sein. Alternativ kann die Halteanordnung metallische Elemente aufweisen, die an dem Anschlusskörper befestigt und mit dem Substrat verschweißbar sind. Auch ist ein Verkleben des Anschlusskörpers mit dem Substrat denkbar.

Ferner bezieht sich die vorliegende Erfindung auf eine Heißkanaldüse mit einer Anschlusseinrichtung der zuvor beschriebenen Art.

Schließlich betrifft die Erfindung auch eine elektrische Verbindung zwischen einer auf einem Substrat angeordneten Heizeinrichtung, insbesondere einer Heizeinrichtung für eine Spritzgießdüse, und einer Anschlussleitung, die mit einer Stromquelle verbunden ist, mit einer erfindungsgemäßen Anschlusseinrichtung, wobei durch das bzw. die Durchgangslöcher des Anschlusskörpers Anschlussleitungen eingesetzt sind; die Anschlussleitungen in einem vorbestimmten Abstand von den durch das bzw. die Durchganglöcher hindurch geführten Anschlussleitungsenden gebogen oder verformt sind; die Anschlussleitungsenden in den für diese vorgesehene(n) Aussparung(en) angeordnet sind; die Anschlussleitungsenden mit Kontaktpads der Heizeinrichtung kontaktiert sind und der Anschlusskörper an dem Substrat befestigt ist.

Vorteilhaft sind die Oberflächen der Anschlussleitungsenden und/oder die Oberflächen der Kontaktpads mit einer Leitpaste versehen, die in einem Wärmebehandlungsschritt zur Erzielung eines dauerhaften elektrischen Kontaktes aufschmelzbar sind.

Die Anschlussleitungsenden sind zur Vergrößerung der Kontaktfläche vorteilhaft flachpressbar, wodurch eine bessere elektrische Verbindung sowie eine bessere Befestigung erzielbar sind. Die Form der Kontaktfläche der Anschlussleitungsenden kann auch an diejenige der Anschlusspads angepasst werden, wenn beispielsweise die Oberfläche der Anschlusspads uneben ist.

Der Anschlusskörper ist an dem Substrat gemäß der Erfindung mit Hilfe eines Klebstoffes befestigbar. Alternativ kann der Anschlusskörper auch mit Hilfe einer Halteanordnung in der zuvor beschriebenen Art an dem Substrat oder in sonstiger Art und Weise befestigbar sein.

Schließlich können die an das Substrat angrenzenden Kanten des Anschlusskörpers mit einem Dichtungsmittel abgedichtet werden, um die elektrische Verbindung vor Feuchtigkeit zu schützen.

Nachfolgend werden verschiedene beispielhafte Ausführungsformen der erfindungsgemäßen Anschlusseinrichtung unter Bezugnahme auf die beiliegende Zeichnung genauer beschrieben. Darin ist:
- Fig. 1: eine schematische Schnittansicht einer Heißkanaldüse mit einer Flachschichtheizung;
- Fig. 2: eine vergrößerte Ansicht des in Fig. 1 mit einem Kreis gekennzeichneten Ausschnittes;
- Fig. 3: eine Schnittansicht der um 90° gedrehten Heißkanaldüse gemäß Fig. 1, welche Anschlusspads der Flachschichtheizung zeigt;
- Fig. 4: eine Ausführungsform eines Anschlusskörpers einer Anschlusseinrichtung gemäß der vorliegenden Erfindung ;
- Fig. 5: eine Ansicht einer Anschlussleitung, die bei der Anschlusseinrichtung gemäß Fig. 4 verwendet wird;
- Fig. 6: eine perspektivische Ansicht des in Fig. 4 dargestellten Anschlusskörpers im an der Heißkanaldüse festgelegten Zustand;
- Fig. 7: eine perspektivische Ansicht des in Fig. 4 dargestellten Anschlusskörpers im festgelegten Zustand;
- Fig. 8: eine alternative Ausführungsform eines Anschlusskörpers einer Anschlusseinrichtung gemäß der vorliegenden Erfindung;
- Fig. 9: eine weitere alternative Ausgestaltung eines Anschlusskörpers einer Anschlusseinrichtung gemäß der vorliegenden Erfindung und
- Fig. 10: eine noch andere Ausführungsform eines Anschlusskörpers.

Nachfolgend beziehen sich gleiche Bezugsziffern auf gleiche oder gleichartige Bauteile.

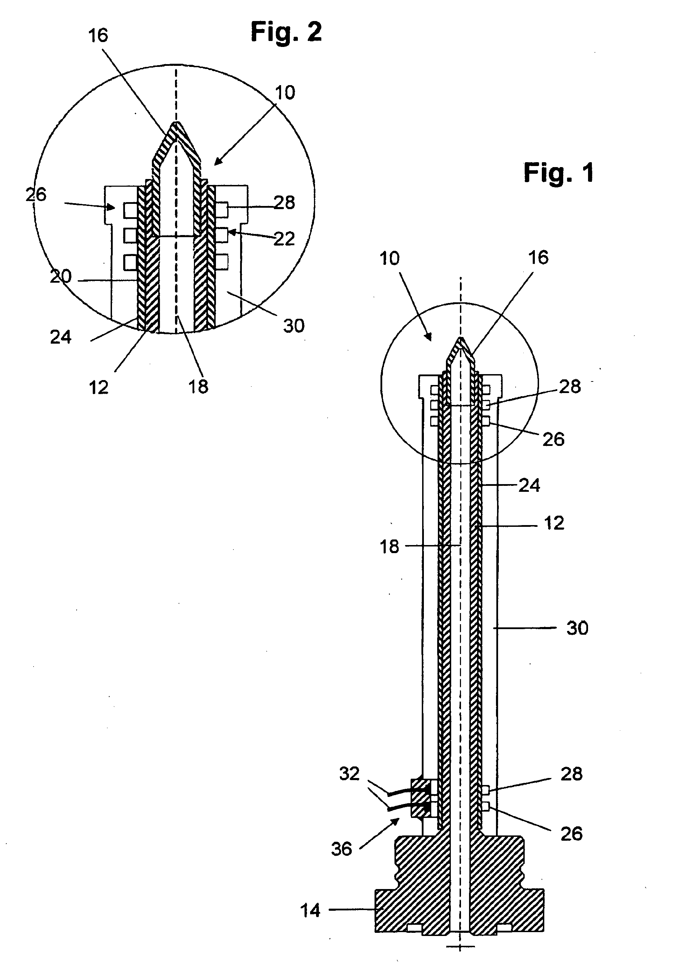

Die in Fig. 1 dargestellte Heißkanaldüse 10 hat als Bestandteil einer Spritzgussanlage für die thermoplastische Kunststoffverarbeitung zur Festlegung an einem (nicht dargestellten) Verteiler ein (ebenfalls nicht gezeigtes) Gehäuse, in das ein insgesamt zylindrisches Materialrohr 12 einsetzbar ist. Ein an diesem endseitig ausgebildeter Sockel 14 oder Flansch schließt bündig mit dem Gehäuse ab und liegt dichtend an dem Verteiler an. In das sich in Axialrichtung längs erstreckende Materialrohr 12 ist endseitig eine Düsenspitze 16 eingesetzt, beispielsweise eingeschraubt, die den in dem Materialrohr 12 ausgebildeten Strömungskanal 18 bis an die (nicht dargestellte) Ebene eines (ebenfalls nicht sichtbaren) Formnestes fortsetzt. Die Düsenspitze 16 kann bei gleicher Funktionsweise auch einteilig mit dem Materialrohr 12 ausgebildet sein.

Auf dem Umfang der Wandung 20 des aus Stahl gefertigten Materialrohrs 12 ist eine Heizung 22 aufgebracht. Diese ist als Flachschichtheizung ausgebildet mit einer unmittelbar auf dem Metall aufgebrachten keramischen Dielektrikumsschicht 24 als Isolationsschicht, einer darüber aufgebrachten Heizschicht 26, die mäanderförmige Heizleiterbahnen 28 aufweisen kann, sowie einer äußere Abdeckschicht 30, welche die Heizleiterbahnen 28 nach außen hin abdeckt und elektrisch isoliert. Die beliebig gestaltbaren Heizleiterbahnen 28 können je nach erforderlicher Leistung in unterschiedlicher Dichte und Anordnung auf der Dielektrikumsschicht 24 aufgebracht sein. Hierdurch lässt sich bei Bedarf eine definierte Temperaturverteilung innerhalb des Materialrohrs 12 erzielen.

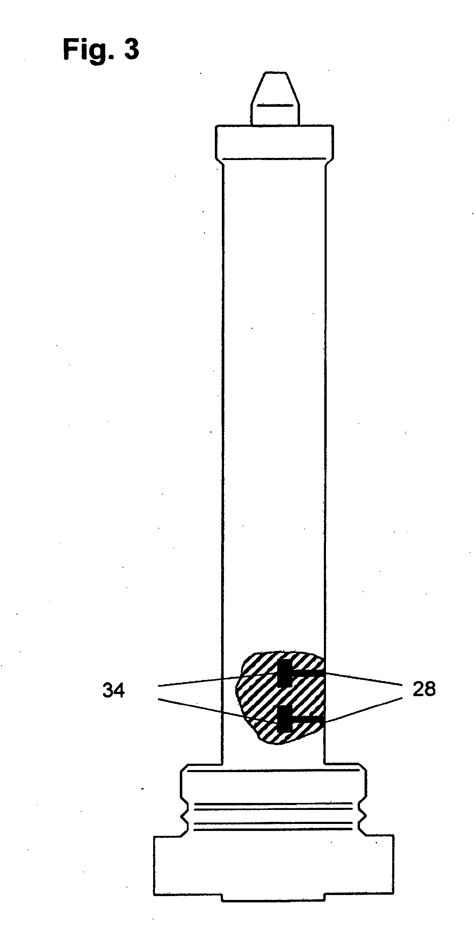

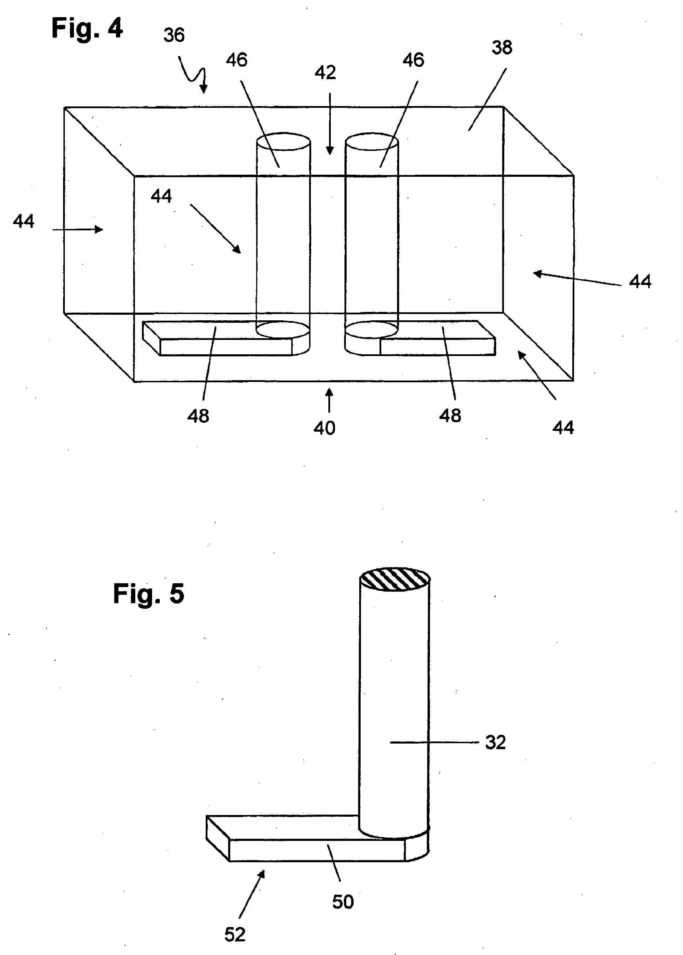

Zum Erzeugen einer elektrischen Verbindung zwischen der Heizung 22 und Anschlussleitungen 32, die mit einer nicht dargestellten Stromquelle verbunden sind, ist auf den in Fig. 3 dargestellten Anschlusspads 34 der Heizung 22 eine Anschlusseinrichtung 36 gemäß der vorliegenden Erfindung angeordnet, durch welche die Anschlussleitungen 32 zu den Anschlusspads 34 geführt und mit diesen elektrisch verbunden sind. Die Anschlusseinrichtung 36 erstreckt sich bis zu den Anschlusspads 34 durch eine entsprechende Aussparung, die in der Abdeckschicht 30 vorgesehen ist. Nachfolgend werden verschiedene Ausführungsformen der Anschlusseinrichtung 36 unter Bezugnahme auf die Fig. 4 bis 9 näher erläutert.

Fig. 4 zeigt eine perspektivische Ansicht einer ersten Ausführungsform eines Anschlusskörpers 38 einer ersten Ausführungsform einer erfindungsgemäßen Anschlusseinrichtung 36, wobei der Anschlusskörper 38 zu Darstellungszwecken durchsichtig als Drahtmodell dargestellt ist. Der in Fig. 4 dargestellte Körper 38 findet beispielsweise bei Heißkanaldüsen 10 Anwendung, die ein Materialrohr 12 mit rechteckigem Querschnitt und somit ebenen Seitenflächen aufweisen. Bei dem Anschlusskörper 38 handelt es sich um einen quaderförmigen Körper aus einem elektrisch nicht leitenden Material, insbesondere aus einer nicht leitenden Keramik, wie beispielsweise Aluminiumoxid, Steatit oder Zirkonoxid. Der Anschlusskörper 38 umfasst eine untere Seitenfläche 40, die im erfindungsgemäßen Zustand den in Fig. 3 dargestellten Anschlusspads 34 der Heizung 22 zu gewandt ist, eine der unteren Seitenfläche 40 gegenüberliegende obere Seitenfläche 42 sowie vier weitere Seitenflächen 44, welche die untere Seitenfläche 40 und die obere Seitenfläche 42 miteinander verbinden.

Zwischen der unteren Seitenfläche 40 und der oberen Seitenfläche 42 sind zwei parallel zueinander angeordnete Durchgangslöcher 46 ausgebildet, die im bestimmungsgemäßen Zustand zur Aufnahme der Anschlussleitungen 32 dienen. An der unteren Seitenfläche 40 sind ferner nutenartige Aussparungen 48 vorgesehen, die jeweils mit einem der Durchgangslöcher 46 kommunizieren. Diese Aussparungen 48 dienen dazu, im bestimmungsgemäß angeordneten Zustand umgebogene freie Endabschnitte 50 jeweils einer Anschlussleitung 32 aufzunehmen. Die Aussparungen 48 sind derart angeordnet, voneinander beabstandet und dimensioniert, dass sie im bestimmungsgemäß angeordneten Zustand jeweils über einem der Anschlusspads 34 angeordnet sind.

Fig. 5 zeigt eine perspektivische Ansicht einer Anschlussleitung 32 in demjenigen Zustand, in dem diese in dem in Fig. 4 dargestellten Anschlusskörper 38 angeordnet ist. Wie Fig. 5 zeigt, ist der freie Endabschnitt 50 der Anschlussleitung 32 umgebogen und flach gepresst, wodurch sich eine im wesentlichen ebene Kontaktfläche 52 ergibt, die im bestimmungsgemäß angeordneten Zustand die Oberseite eines der Anschlusspads 34 berührt. Die Kontaktfläche 52 des freien Endabschnittes 50 der Anschlussleitungen 32 und/oder die Oberflächen der Kontaktpads 34 sind beispielsweise mit einer Leitpaste versehen, die in einem Wärmebehandlungsschritt zur Erzielung eines dauerhaften elektrischen Kontakts aufgeschmolzen wird.

Um die Anschlussleitungen 32 mit den Kontaktpads 34 elektrisch zu verbinden, werden die Anschlussleitungen 32 durch die Durchganglöcher 46 von der oberen Seitenfläche 42 des Anschlusskörpers 38 zur unteren Seitenfläche 40 durchgeschoben, anschließend umgebogen und flach gepresst, und schließlich in den Aussparungen 48 angeordnet. Daraufhin wird der Anschlusskörper 38 auf die an den ebenen Seitenflächen des Materialrohrs 12 angeordneten Anschlusspads 34 der Heizung 22 aufgesetzt, woraufhin in einem Wärmebehandlungsschritt die an den freien Endabschnitten 50 der Anschlussleitungen 32 und/oder an den Oberflächen der Anschlusspads 34 vorgesehene Leitpaste aufgeschmolzen wird, wodurch ein dauerhafter elektrischer Kontakt zwischen den Anschlussleitungen 32 und den Anschlusspads 34 erzielt wird.

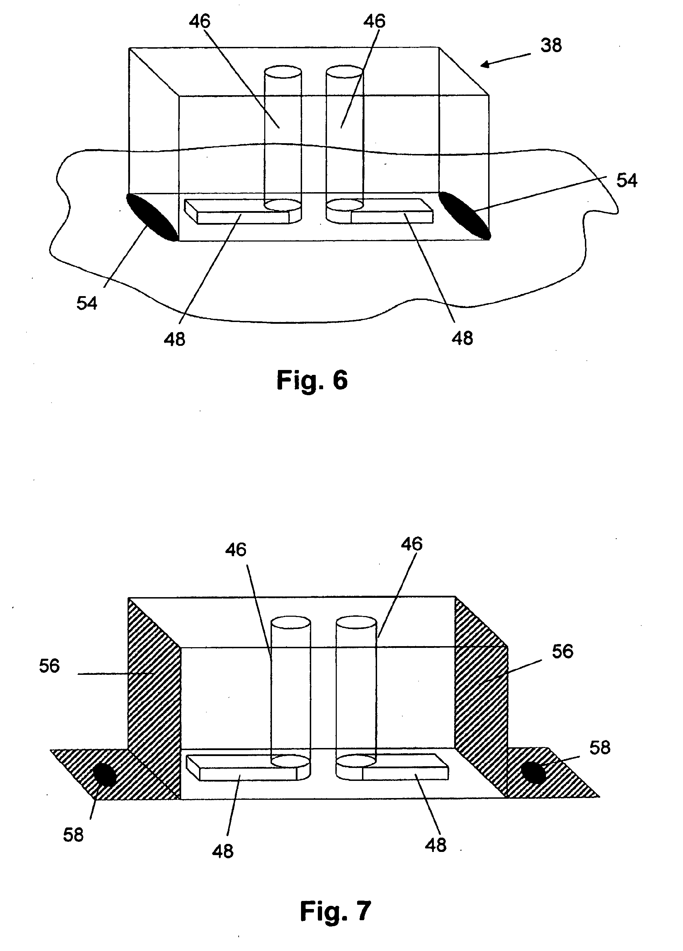

Um den in Fig. 4 dargestellten Anschlusskörper 38 an der Heißkanaldüse 10 festzulegen, kann dieser beispielsweise mit Hilfe eines Keramikklebers oder dergleichen mit der Heißkanaldüse 10 verklebt werden, wie es beispielhaft in Fig. 6 durch die Klebeverbindungen 54 angedeutet ist.

Alternativ kann an den Seitenflächen 44 des Anschlusskörpers 38 auch eine Halteanordnung in Form metallischer Winkelelemente 56 angeordnet werden, wobei die Winkelelemente 56 mit einem metallischen Substrat der Heißkanaldüse 10 verschweißt werden können, wie es anhand der Schweißpunkte 58 in Fig. 7 dargestellt ist. Die Winkelelement 56 können mit den Seitenflächen 44 des Anschlusskörpers 38 verklebt oder verlötet sein.

Alternativ kann es sich bei der Halteanordnung auch um eine Klemmeinrichtung oder um eine Rasteinrichtung zum lösbaren Befestigen des Anschlusskörpers 38 an einem Substrat der Heißkanaldüse 10 handeln, was vorliegend jedoch nicht näher dargestellt ist. In diesem Fall werden die freien Endabschnitte 50 der Anschlussleitungen 32 von dem Anschlusskörper 38 gegen die Anschlusspads 34 der Heizung 22 gepresst.

Ferner können die einander berührenden Flächen des Anschlusskörpers 38 und des Substrats der Heißkanaldüse 10 mit einem Dichtungsmittel abgedichtet werden, um das Eindringen von Feuchtigkeit zu verhindern, was ebenfalls nicht dargestellt ist.

Bei den in den Fig. 4 bis 7 dargestellten erfindungsgemäßen Anschlusseinrichtungen 36 wird der erforderliche elektrische Kontakt zwischen der Heizung 22 und den mit einer Stromquelle verbundenen Anschlussleitung 32 zuverlässig erzeugt. Ferner bieten die Anschlusseinrichtungen 36 eine hinreichende Zugentlastung in Bezug auf die Verbindungen zwischen den Anschlusspads 34 und den Anschlussleitungen 32, die den vorherrschenden mechanischen Zuganforderungen genügen. Zudem schaffen die Anschlusseinrichtungen 36 die erforderlichen elektrische Isolation nach innen und außen. Schließlich sind die Anschlusseinrichtungen 36 klein dimensioniert, um eine Miniaturisierung der Spritzgießdüse 10 zu ermöglichen, was insbesondere bei der in den Fig. 1 und 2 dargestellten Heißkanaldüse 10 von Bedeutung ist, die zwecks Miniaturisierung bereits mit einer Dickschichtheizung versehen ist.

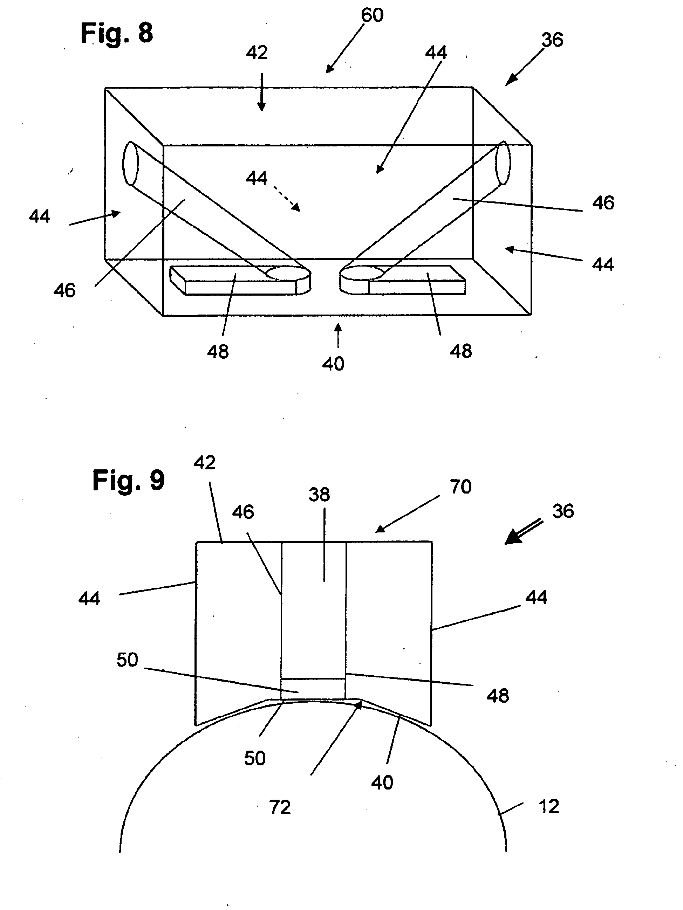

Fig. 8 zeigt eine andere Ausführungsform eines Anschlusskörpers 60 einer Anschlusseinrichtung 36 gemäß der vorliegenden Erfindung. Der Anschlusskörper 60 unterscheidet sich dahingehend von dem in Fig. 4 dargestellten Anschlusskörper 38, dass die Durchgangslöcher 46 nicht senkrecht zur unteren Seitenfläche 40 und der oberen Seitenfläche 42 ausgebildet sind sondern sich schräg zwischen zwei einander gegenüberliegenden Seitenflächen 44 und der unteren Seitenfläche 40 erstrecken. Auf diese Weise werden die Anschlussleitungen 32 seitlich aus dem Anschlusskörper 60 heraus geführt, wodurch je nach Ausgestaltung der Heißkanaldüse 10 weiterer Bauraum eingespart werden kann und gleichzeitig die Vorteile der erfindungsgemäßen Anschlusseinrichtung 36 erzielt werden.

Alternativ ist es möglich, beide Durchgangslöcher 46 parallel zueinander auszubilden, sodass sich diese zwischen der gleichen Seitenfläche 44 und der unteren Seitenfläche 40 erstrecken. Dazu sollten die Anschlusspads 34 der Heizung 22 entsprechend parallel zueinander angeordnet werden.

Fig. 9 zeigt noch eine weitere Ausführungsform eines Anschlusskörpers 70 einer Anschlusseinrichtung 36 gemäß der vorliegenden Erfindung. Dieser Anschlusskörper 70 unterscheidet sich von den zuvor beschriebenen Anschlusskörpern im Wesentlichen dahingehend, dass die untere Seitenfläche 40 eine Aussparung oder Höhlung 72 mit trapezförmigem Querschnitt aufweist. Dieser trapezförmige Querschnitt dient dazu, die untere Seitenfläche 40 des Anschlusskörpers 70 an eine runde Substratfläche einer Heißkanaldüse 10, die vorliegend schematisch im Querschnitt dargestellt ist, anzupassen, um einen möglichst guten Halt der Anschlusseinrichtung an der Heißkanaldüse 10 zu gewährleisten.

In einer weiteren (nicht dargestellten) Bauform kann man die untere Seitenfläche 40 des Anschlusskörpers 70 der Oberfläche des Materialrohrs 12 anpassen, indem die Fläche 40 als Zylinderfläche ausgebildet wird. Gleichzeitig können auch die freien Endabschnitte 50 der Anschlussleitungen 32 entsprechend geformt werden, so dass ein stets optimaler elektrischer Kontakt gewährleistet ist.

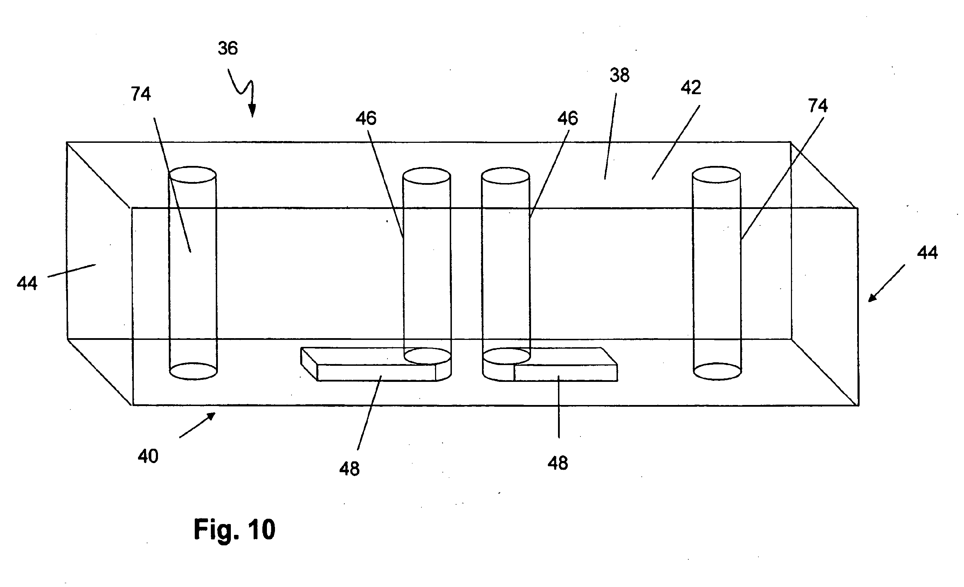

Fig. 10 zeigt eine weitere Variante einer Anschlusseinrichtung 36. Der hier dargestellte Anschlusskörper 38 entspricht im Wesentlichem der Ausführungsform von Fig. 4. Er ist lediglich zu beiden Seiten der Aussparungen 48 länger ausgebildet und mit zusätzlichen Durchgangsbohrungen 74 versehen. Dadurch ist es möglich, den Anschlusskörper 38 auch ohne Klebeverbindungen 54 oder Winkelelemente 56 fest mit dem Materialrohr 12 zu verbinden. Die zusätzlichen Bohrungen 74 nehmen je einen (nicht gezeigten) Stift auf, der lotrecht über der Oberfläche des Materialrohrs 12 an diesem angeschweißt ist, z.B. durch Elektroschweißen. Der Anschlusskörper 38 wird als Anschlusskopf auf die Stifte aufgesteckt, wobei sich letztere entweder reibschlüssig in die Bohrungen 74 einfügen oder mit ihren überstehenden Enden auf der Oberfläche 42 des Körpers 38 umgebogen werden. Die Stifte können alternativ oder ergänzend auch mit Köpfen versehen werden, die nietähnlich flachgepreßt werden.

Die Bohrungen 74 können auch als seitliche Nuten in den Seitenflächen 44 ausgebildet sein.

Es sollte klar sein, dass weitere Modifikationen und Änderungen an der erfindungsgemäßen Anschlusseinrichtung vorgenommen werden können, ohne den Schutzbereich der vorliegenden Erfindung zu verlassen, der durch die beiliegenden Ansprüche definiert ist.

### Bezugszeichenliste

- 10: Heißkanaldüse
- 12: Materialrohr
- 14: Sockel
- 16: Düsenspitze
- 18: Strömungskanal
- 20: Wandung
- 22: Heizung
- 24: Dielektrikumsschicht
- 26: Heizschicht
- 28: Heizleiterbahn
- 30: Abdeckschicht
- 32: Anschlussleitungen
- 34: Anschlusspads
- 36: Anschlusseinrichtung
- 38: Anschlusskörper
- 40: untere Seitenfläche
- 42: obere Seitenfläche
- 44: Seitenflächen
- 46: Durchgangslöcher
- 48: Aussparungen
- 50: freie Endabschnitte
- 52: Kontaktfläche
- 54: Klebeverbindungen
- 56: Winkelelemente
- 58: Schweißpunkte
- 60: Anschlusskörper
- 70: Anschlusskörper
- 72: Aussparung

## Patentansprüche

1. Anschlusseinrichtung (36) zum Erzeugen einer elektrischen Verbindung zwischen einer auf einem Substrat angeordneten Heizeinrichtung (22), insbesondere einer Heizeinrichtung (22) für eine Heißkanaldüse (10), und zumindest einer Anschlussleitung (32), die mit einer Stromquelle verbunden ist,
▪ wobei die Anschlusseinrichtung (36) einen Anschlusskörper (38; 60; 70) aufweist,
▪ wobei der Anschlusskörper (38; 60; 70) aus einem elektrisch nicht leitenden Material hergestellt ist,
▪ wobei der Anschlusskörper (38; 60; 70) ein Durchgangsloch (46) zur Aufnahme der zumindest einen Anschlussleitung (32) aufweist, das im bestimmungsgemäßen Zustand in einer der Heizeinrichtung (22) zugewandten Seitenfläche (40) des Anschlusskörpers (38; 60; 70) endet,
**dadurch gekennzeichnet,**
▪ **dass** der Anschlusskörper (38; 60; 70) derart an und/oder auf dem Substrat fixierbar ist, dass im bestimmungsgemäßen Zustand eine durch das Durchgangsloch (46) hindurchgeführte Anschlussleitung (32) mit ihrem freien Ende mit der Heizeinrichtung (22) in Kontakt steht; und
▪ **dass** der Anschlusskörper (38; 60; 70) an derjenigen Seitenfläche (40), die der Heizeinrichtung (22) im bestimmungsgemäßen Zustand zugewandt ist, zumindest eine Aussparung (48) aufweist, die derart ausgelegt ist, dass in ihr ein umgebogener Abschnitt (50) eines freien Endes einer Anschlussleitung (32) aufnehmbar ist.

2. Anschlusseinrichtung (36) nach Anspruch 1, **dadurch gekennzeichnet, dass** der Anschlusskörper (38; 60; 70) für jede Anschlussleitung (32) ein separates Durchgangsloch (46) aufweist.

3. Anschlusseinrichtung (36) nach Anspruch 1 oder 2, **dadurch gekennzeichnet, dass** der Anschlusskörper (38; 60; 70) derart ausgebildet ist, dass die freien Enden der Anschlussleitungen (32) im bestimmungsgemäßen Zustand zwischen derjenigen Seitenfläche (40) des Anschlusskörpers (38; 60; 70), die der Heizeinrichtung (22) zugewandt ist, und der Heizeinrichtung (22) angeordnet sind und für jeden Abschnitt eines freien Endes einer Anschlussleitung (32) eine separate Aussparung (48, 72) vorgesehen ist.

4. Anschlusseinrichtung (36) nach Anspruch 3, **dadurch gekennzeichnet, dass** die Aussparung (48) einen nutartig ausgebildeten Abschnitt aufweist.

5. Anschlusseinrichtung (36) nach einem der Ansprüche 3 oder 4, **dadurch gekennzeichnet, dass** die zumindest eine Aussparung (72) einen Abschnitt aufweist, der derart ausgebildet ist, dass er an die Oberfläche desjenigen Substrats, an dem der Anschlusskörper (70) im bestimmungsgemäßen Zustand fixiert werden soll, angepasst ist.

6. Anschlusseinrichtung (36) nach einem der vorhergehenden Ansprüche, **dadurch gekennzeichnet, dass** die Anschlusseinrichtung (36) eine Halteanordnung zum Befestigen des Anschlusskörpers (38; 60; 70) an dem Substrat aufweist.

7. Anschlusseinrichtung (36) nach Anspruch 6, **dadurch gekennzeichnet, dass** die Halteanordnung eine Klemmeinrichtung- oder Rasteinrichtung zum lösbaren Befestigen des Anschlusskörpers (38; 60; 70) an dem Substrat ist.

8. Anschlusseinrichtung (36) nach Anspruch 6 oder 7, **dadurch gekennzeichnet, dass** die Halteanordnung metallische Elemente (56) aufweist, die an dem Anschlusskörper (38) befestigt und mit dem Substrat verschweißbar sind.

9. Heißkanaldüse (10) mit einer Anschlusseinrichtung (36) nach einem der vorhergehenden Ansprüche.

10. Elektrische Verbindung zwischen einer auf einem Substrat angeordneten Heizeinrichtung (22), insbesondere eine Heizeinrichtung (22) für eine Heißkanaldüse (10), und zumindest einer Anschlussleitung (32), die mit einer Stromquelle verbunden ist, mit einer Anschlusseinrichtung (36) nach einem der vorhergehenden Ansprüche, wobei
▪ durch die Durchgangslöcher (46) des Anschlusskörpers (38; 60; 70) Anschlussleitungen (32) eingesetzt sind;
▪ die Anschlussleitungen (32) in einem vorbestimmten Abstand von den durch die Durchgangslöcher (46) hindurchgeführten Anschlussleitungsenden gebogen sind;
▪ die Anschlussleitungsenden in den für diese vorgesehenen Aussparungen (48; 72) angeordnet sind,
▪ die Anschlussleitungsenden mit Anschlusspads (34) der Heizeinrichtung (22) kontaktiert sind und
▪ der Anschlusskörper (38; 60; 70) an dem Substrat befestigt ist.

11. Elektrische Verbindung nach Anspruch 10, **dadurch gekennzeichnet, dass** die Oberflächen der Anschlussleitungsenden und/oder die Oberflächen der Anschlusspads (34) mit einer Leitpaste versehen sind, die in einem Wärmebehandlungsschritt zur Erzielung eines dauerhaften elektrischen Kontaktes aufschmelzbar ist.

12. Elektrische Verbindung nach Anspruch 10 oder 11, **dadurch gekennzeichnet, dass** die Anschlussleitungsenden zur Vergrößerung der Kontaktfläche flachpressbar sind.

13. Elektrische Verbindung nach einem der Ansprüche 10 bis 12, **dadurch gekennzeichnet, dass** die Form der Kontaktfläche der Anschlussleitungsenden an diejenige der Anschlusspads (34) anpassbar ist.

14. Elektrische Verbindung nach einem der Ansprüche 10 bis 13, **dadurch gekennzeichnet, dass** der Anschlusskörper (38; 60; 70) an dem Substrat mit Hilfe eines Klebstoffes befestigbar ist, oder dass der Anschlusskörper (38; 60; 70) an dem Substrat mit Hilfe einer Halteanordnung befestigbar ist, wenn eine solche vorhanden ist.

15. Elektrische Verbindung nach einem der Ansprüche 10 bis 14, **dadurch gekennzeichnet, dass** die an das Substrat angrenzenden Kanten des Anschlusskörpers (38; 60; 70) mit einem Dichtungsmittel abdichtbar sind.

## Claims

1. Connection device (36) for producing an electrical connection between a heater (22) arranged on a base, in particular a heater (22) for a hot runner nozzle (10), and at least one power cord (32) connected to a power source,
- the connection device (36) comprising a connection body (38; 60; 70),
- the connection body (38; 60; 70) being produced from an electrically nonconducting material,
- the connection body (38; 60; 70) having at least one passage (46) designed to receive the at least one power cord (32), which passage ends, in the specified state, in a side face (40) of the connection body (38; 60; 70) facing the heater (22),
**characterised in that**
- the connection body (38; 60; 70) can be fixed to and/or on said base so that, in the specified state, the free ends of a power cord (32) which has been passed through the passage (46) are in contact with the heater (22); and **in that**
- the connection body (38; 60; 70) comprises at least one recess (48) on the side face (40) facing the heater (22) in the specified state, which recess is designed such that a bent portion (50) of a free end of a power cord (32) can be received therein.

2. Connection device (36) according to claim 1, **characterised in that** the connection body (38; 60; 70) comprises a separate passage (46) for each power cord (32).

3. Connection device (36) according to either claim 1 or claim 2, **characterised in that** the connection body (38; 60; 70) is designed such that, in the specified state, the free ends of the power cords (32) are arranged between the side face (40) of the connection body (38; 60; 70) facing the heater (22) and said heater (22), and a separate recess (48, 72) is provided for each portion of a free end of a power cord (32).

4. Connection device (36) according to claim 3, **characterised in that** the recess (48) comprises a groove-like portion.

5. Connection device (36) according to any of claims 3 or 4, **characterised in that** the at least one recess (72) comprises a portion designed to match the surface of the base to which the connection body (70) is to be fixed in the specified state.

6. Connection device (36) according to any of the preceding claims, **characterised in that** the connection device (36) comprises a retention arrangement to attach the connection body (38; 60; 70) to the base.

7. Connection device (36) according to claim 6, **characterised in that** the retention arrangement is a clamping device or snap-in device for releasably attaching the connection body (38; 60; 70) to the base.

8. Connection device (36) according to either claim 6 or claim 7, **characterised in that** the retention arrangement comprises metallic elements (56) that are attached to the connection body (38) and can be welded to the base.

9. Hot runner nozzle (10) comprising a connection device (36) according to any of the preceding claims.

10. Electrical connection between a heater (22) arranged on a base, in particular a heater (22) for a hot runner nozzle (10), and at least one power cord (32) connected to a power source, comprising a connection device (36) according to any of the preceding claims, wherein
- power cords (32) are inserted through the passages (46) of the connection body (38; 60; 70);
- the power cords (32) are bent at a predetermined distance from the power cord ends which have been passed through the passages (46);
- the power cord ends are arranged in the recesses (48; 72) provided therefor;
- the power cord ends are bonded to connection pads (34) of the heater (22); and
- the connection body (38; 60; 70) is attached to the base.

11. Electrical connection according to claim 10, **characterised in that** the surfaces of the power cord ends and/or the surfaces of the connection pads (34) are provided with a conductive paste which can be melted on during a heat treatment step in order to achieve a permanent electrical contact.

12. Electrical connection according to either claim 10 or claim 11, **characterised in that** the power cord ends may be pressed flat in order to increase the contact surface.

13. Electrical connection according to any of claims 10 to 12, **characterised in that** the shape of the contact surface of the power cord ends can be matched to that of the connection pads (34).

14. Electrical connection according to any of claims 10 to 13, **characterised in that** the connection body (38; 60; 70) can be attached to the base by means of an adhesive, or **in that** the connection body (38; 60; 70) can be attached to the base by means of a retention arrangement when such an arrangement is available.

15. Electrical connection according to any of claims 10 to 14, **characterised in that** the edges of the connection body (38; 60; 70) adjacent to the base may be sealed using a sealant.

## Revendications

1. Dispositif de connexion (36) pour établir une connexion électrique entre un dispositif de chauffage (22) aménagé sur un substrat, en particulier un dispositif de chauffage (22) pour une buse de canal chauffant (10), et au moins une ligne de connexion (32) qui est reliée à une source de courant,
• dans lequel le dispositif de connexion (36) présente un corps de connexion (38 ; 60 ; 70),
• dans lequel le corps de connexion (38 ; 60 ; 70) est constitué d'un matériau qui n'est pas conducteur de l'électricité,
• dans lequel le corps de connexion (38 ; 60 ; 70) présente un trou de passage (46) pour recevoir la au moins une ligne de connexion (32) qui se termine, en fonction de la destination, par une face latérale (40) du corps de connexion (38 ; 60 ; 70) tournée vers le dispositif de chauffage (22),
**caractérisé en ce que** :
• le corps de connexion (38 ; 60 ; 70) peut être fixé au et/ou sur le substrat de sorte que, en fonction de la destination, une ligne de connexion (32) enfilée à travers le trou de passage (46) vienne, par son extrémité libre, en contact avec le dispositif de chauffage (22) ; et
• le corps de connexion (38 ; 60 ; 70) présente, sur la face latérale (40) qui est tournée vers le dispositif de chauffage (22) en fonction de la destination, au moins une cavité (48) qui est dimensionnée de sorte qu'elle puisse recevoir une section cintrée (50) d'une extrémité libre d'une ligne de connexion (32).

2. Dispositif de connexion (36) selon la revendication 1, **caractérisé en ce que** le corps de connexion (38 ; 60 ; 70) présente un trou de passage séparé (46) pour chaque ligne de connexion (32).

3. Dispositif de connexion (36) selon la revendication 1 ou la revendication 2, **caractérisé en ce que** le corps de connexion (38 ; 60 ; 70) est conformé de sorte que les extrémités libres des lignes de connexion (32) soient aménagées, en fonction de la destination, entre la face latérale (40) du corps de connexion (38 ; 60 ; 70), qui est tournée vers le dispositif de chauffage (22), et le dispositif de chauffage (22) et il est prévu pour chaque section d'une extrémité libre d'une ligne de connexion (32) une cavité séparée (48, 72) .

4. Dispositif de connexion (36) selon la revendication 3, **caractérisé en ce que** la cavité (48) présente une section en forme de rainure.

5. Dispositif de connexion (36) selon l'une quelconque des revendications 3 ou 4, **caractérisé en ce que** la au moins une cavité (72) présente une section qui est conformée de manière à être adaptée à la surface du substrat, sur laquelle le corps de connexion (70) doit être fixé en fonction de la destination.

6. Dispositif de connexion (36) selon l'une quelconque des revendications précédentes, **caractérisé en ce que** le dispositif de connexion (36) présente un système de retenue pour fixer le corps de connexion (38 ; 60 ; 70) sur le substrat.

7. Dispositif de connexion (36) selon la revendication 6, **caractérisé en ce que** le système de retenue est un dispositif de verrouillage ou d'encliquetage pour la fixation amovible du corps de connexion (38 ; 60 ; 70) sur le substrat.

8. Dispositif de connexion (36) selon la revendication 6 ou la revendication 7, **caractérisé en ce que** le système de retenue présente des éléments métalliques (56) qui sont fixés au corps de connexion (38) et peuvent être soudés au substrat.

9. Buse de canal chauffant (10) avec un dispositif de connexion (36) selon l'une quelconque des revendications précédentes.

10. Connexion électrique entre un dispositif de chauffage (22) agencé sur un substrat, en particulier un dispositif de chauffage (22) pour une buse de canal chauffant (10), et au moins une ligne de connexion (32), qui est reliée à une source de courant, avec un dispositif de connexion (36) selon l'une quelconque des revendications précédentes, dans laquelle :
• on introduit des lignes de connexion (32) à travers les trous de passage (46) du corps de connexion (38 ; 60 ; 70) ;
• les lignes de connexion (32) sont cintrées à une distance prédéterminée des extrémités des lignes de connexion enfilées à travers les trous de passage (46) ;
• les extrémités des lignes de connexion sont aménagées dans les cavités (48 ; 72) prévues pour celles-ci ;
• les extrémités des lignes de connexion sont mises en contact avec des plaquettes de connexion (34) du dispositif de chauffage (22) ; et
• le corps de connexion (38 ; 60 ; 70) est fixé sur le substrat.

11. Connexion électrique selon la revendication 10, **caractérisée en ce que** les surfaces des extrémités des lignes de connexion et/ou les surfaces des plaquettes de connexion (34) sont pourvues d'une pâte conductrice qui peut être fondue au cours d'une étape de traitement thermique pour obtenir un contact électrique durable.

12. Connexion électrique selon la revendication 10 ou la revendication 11, **caractérisée en ce que** les extrémités des lignes de connexion peuvent être pressées à plat pour augmenter la surface de contact.

13. Connexion électrique selon l'une quelconque des revendications 10 à 12, **caractérisée en ce que** la forme de la surface de contact des extrémités des lignes de connexion peut être adaptée à celle des plaquettes de connexion (34).

14. Connexion électrique selon l'une quelconque des revendications 10 à 13, **caractérisée en ce que** le corps de connexion (38 ; 60 : 70) peut être fixé au substrat à l'aide d'un adhésif ou le corps de connexion (38 ; 60 ; 70) peut être fixé sur le substrat à l'aide d'un système de retenue lorsqu'un tel système est présent.

15. Connexion électrique selon l'une quelconque des revendications 10 à 14, **caractérisée en ce que** les bords adjacents au substrat du corps de connexion (38 ; 60 ; 70) peuvent être étanchés avec un agent d'étanchéité.
